# EUROPEAN PATENT APPLICATION

(11) **EP 4 601 244 A1**
(43) Date of publication of application: **13.08.2025**
(21) Application number: 24156733.8
(22) Date of filing: 09.02.2024
(51) Int. Cl.: H04L 9/40, H04L 61/4511

(54) **TECHNIQUES TO ENABLE EFFICIENT COMMUNICATION BETWEEN TWO NETWORKS**

(71) Applicant: Deutsche Telekom AG, 53113 Bonn (DE)
(72) Inventor: Biewald, Manuel, 95514 Neustadt am Kulm (DE)
(74) Representative: Braun-Dullaeus Pannen Emmerling Patent- & Rechtsanwaltspartnerschaft mbB

(57) **Abstract**

Techniques for efficient operating of n32-f communications between two networks comprising the following steps:
• sending a communication request of a first network function within a first network to communicate with a first network function within a second network;
• resolving the communication request by sending a first FQDN message from a vDNS of the first network to a hDNS of the second network, wherein the hDNS sends a first list of at least one first hSEPP of the second network, along with its communication address and a time-to-live, TTL, value;
• providing the list to a vSEPP of the first network to establish a n32-f communication between the vSEPP and the hSEPP;
wherein if the n32-f communication between the vSEPP and the hSEPP is still active and if the TTL value has expired, the vSEPP asks the vDNS to send a second FQDN message to the hDNS, wherein the hDNS sends a second list to the vDNS, wherein an algorithm within the first network compares the first list with the second list and provides the result of the comparison to the vSEPP.

## Description

The invention relates to a method, a SEPP and a communication system to enable efficient communication between two networks.

It is generally a goal in network configuration, especially in 5G SA roaming, to configure as little as possible statically. For this reason, hSEPP discovery should also take place automatically in the case of roaming, based on information from the SIM, with a well-known FQDN.

Once an n32-f connection has been established between vSEPP and hSEPP and there are a corresponding number of customers from this hPMN in this vPMN so that this n32-f connection never times out, changes, especially in connection with the hSEPPs, can only be released by hard disconnecting this existing connection, whereby all running tasks on this connection are terminated uncontrollably, which is not desirable.

In the view of above, it is an object of the present invention to provide efficient communication between the networks.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

DNS stands for Domain Name System or Domain Name Server. It is a hierarchical and distributed naming system that translates human-readable domain names (like www.example.com) into IP addresses (like 192.168.1.1) that are used by computers to identify each other on a network. In simpler terms, DNS acts as a directory service for the internet, allowing users to access websites and services using easy-to-remember domain names instead of numerical IP addresses. When you enter a domain name in your web browser, the DNS system helps resolve that domain name to the corresponding IP address of the server hosting the website.

A Security Edge Protection Proxy (SEPP) is a network function that is deployed at the edge of a 5G network to protect against signaling attacks and ensure secure communication between different PMNs (Public Mobile Networks) - For some time now, the term PLMN has no longer been in common use and is no longer used in standards since 4G. The term PMN is now often used, as there are now also networks that do not belong to any territorial area. It is a critical component of the 5G Core Network (NGC) and plays a vital role in ensuring the security and integrity of 5G roaming services. The SEPP acts as a proxy between the home network and the visited network, providing a layer of security between them. It performs a number of functions, including: i) Filtering and authorization checks on SBA traffic entering and leaving the network. ii) Encryption and decryption of signaling messages. iii) Protection against denial-of-service (DoS) attacks. iv) Providing access control for roaming traffic.

A Fully Qualified Domain Name (FQDN) is a complete domain name that specifies the exact location of a host within the domain hierarchy of the Domain Name System (DNS). It includes both the host name and the domain name, providing a full and unambiguous path to a specific resource on the Internet.

A FQDN request typically refers to a request made using the complete and specific domain name of a server or resource. This is in contrast to a partial or relative domain name, which may not provide enough information to uniquely identify a particular resource. FQDNs are commonly used in networking, web hosting, and other Internet-related services to ensure accurate and reliable communication between devices.

For example, the FQDN http://www.example.com/ includes the host name "www" and the domain name "example.com," forming a complete and precise address for a web server. When you make a request using the FQDN, it helps DNS servers locate and resolve the corresponding IP address for the requested resource.

In the following, we explain some further terms used within this description. As this description describes roaming use cases we typically have the three following key players:
1. the visited network: The visited network provides the RAN of a current location of a user. But the IMSIs or SIM Cards of the UE of the user does not belong to the visited network. All 3GPP infrastructure parts that are related to the visited network are characterized by using the prefix "v". For example, the SEPP becomes the vSEPP;
2. the home network: The home network operator is also named MNO. The IMSIs or SIM Cards of the UE of the user does belong to the home network. All 3GPP infrastructure parts that are related to the home network are characterized by using the prefix "h". For example, the SEPP becomes the hSEPP;

In the following and throughout this text the prefixes are used to distinguish entities, modules, functions, etc from one another in that sense that the prefix "v" means that an entity/function is associated to the first network and that the prefix "h" means that an entity/function is associated to the second network.

The invention can be applied to current 5G networks and/or future 6G networks. The following standardization documents are hereby fully incorporated into the disclosure: 1) GSMA NG.113 (5GS Roaming Guidelines); 2) TS 23.003, in particular paragraphs 2.2, 2.2A und 2.2B; 3) TS 23.501, in particular paragraphs 5.9.2 und 5.9.2a; 4) TS 29.573; 5) TS 23.501 as valid on 2023-09-19; and 6) 3GPP version 18.4.0, dated 2023-09-19. It is also possible to apply the invention to proceeding and later standards if this is technical possible. In some embodiments, the invention also discloses a modification of the standard versions cited above.

According to a first aspect of the invention, a method for efficient operating of n32-f communications between two networks is disclosed, comprising the following steps:
- sending a communication request of a first network function within or of a first network "vNF1" to communicate with a first network function "hNF1" within or of a second network;
   ∘ the communication request can be sent by a UE of the user and/or by the network operator of the first network himself. In an embodiment, the first network is operated by a first network operator and the second network is operated by a second network operator; first network function can be related to setting up a call, video streaming, calculation tasks, routing, switching, firewalling and/or other network functions that are known to the person skilled in the art;
   ∘ the service can be provided by the interaction of the vNF1 with the hNF1;
- resolving the communication request by sending a first FQDN message from a vDNS of the first network to a hDNS of the second network, wherein the hDNS sends a first list of at least one first hSEPP of the second network, along with its communication address and a time-to-live, TTL, value;
   ∘ the FQDN message is a DNS query with a FQDN. The FQDN message serves the purpose of obtaining the communication address, in particular the IP address, of the first network function of the second network;
   ∘ the vDNS and the hDNS are domain name servers as described above; the vDNS can be a local caching DNS and the hDNS can be an authoritative DNS;
   ∘ hence, the list comprises the information which SEPPs of the second network are available for setting up a n32-f communication to provide the service and to run the communication. If only one hSEPP is listed more than the vSEPP set up the n32-f communication with this at least one hSEPP. This can indicate or specify an order of hSEPPs, for example hSEPP₁ is listed before hSEPP₂. This ordering can we present a load-balancing scheme so that for example more n32-f communications are set up with the hSEPP₁ than with the hSEPP₂.
   ∘ the (DNS) TTL specifies the lifetime (validity) of the response in the local caching DNS (vDNS). For example, if an answer had a validity of one day and the same FQDN was requested again less than 24 hours later, the vDNS would not ask the hDNS but would return the saved answer directly;;
- providing the list to a vSEPP of the first network to establish a n32-f communication between the vSEPP and the first hSEPP;
   ∘ SEPP stands for Security Edge Protection Proxy;
   ∘ based on the list, the vSEPP can establish the n32-f communication with the hSEPP;

It is a core idea of the invention that if the n32-f communication between the vSEPP and the first hSEPP is still active and if the TTL value has expired, the vSEPP asks the vDNS to send a second FQDN message to the hDNS. The vSEPP evaluates the TTL value and can request the vDNS to send the second FQDN message. Then the hDNS sends a second list to the vDNS, wherein an algorithm within the first network compares the first list with the second list and provides the result of the comparison to the vSEPP.

Hence, in this case the timer of the TTL value is not being refreshed if a further n32-f communication is being established between the vSEPP and the first hSEPP. The timer is started when the n32-f communication is established and signals that the TTL value has been expired. Hence, this can be a routine that run in parallel to the existing routines of state-of-the-art n32-f communications. The vSEPP can check if the TTL value has expired and trigger the vDNS to send the second FQDN message. As should be clear within the context, the second list comprises the same kind of information as the first list. The evaluation algorithm can be implemented on the vSEPP.

Based on the result of the comparison, the vSEPP can evaluate if changes regarding the hSEPPs, in particular the first hSEPP, of the second network has occurred.

This provides the advantage that the first network, in particular the vSEPP, gets knowledge about those changes that influence its behavior with respect to setting up further n32-f communications with the second network. This was not possible in the state-of-the-art because the n32-f communication between the vSEPP and the first hSEPP was kept alive if the data traffic was over certain threshold that led to the situation that changes of the hSEPP caused an uncontrolled hard breakout of the respective n32-f communication.

In an embodiment, the first list and/or the second list comprises a plurality of hSEPPs with a corresponding communication address. The TTL can be of the same for all of the hSEPPs or at least some of the hSEPPs can show individual TTLs.

This provides the advantage that it is possible to set up the n32-f communication to different hSEPPs. If a hSEPP is assigned to an individual TTL, changes with respect to this hSEPP can be assessed on a more individualized basis, for example it can be that the hSEPP typically needs to release from data traffic at a certain time of the day due to load-balancing and/or priority reasons. For example, can happen that typically at 12 o'clock a certain QoS value needs to be guaranteed for customer that access is the hSEPP so that it makes sense to remove the data traffic from that hSEPP.

In an embodiment, if the result of the comparison shows no changes the n32-f communication between the vSEPP and the first hSEPP is continued.

This provides the advantage that the communication can smoothly continue by being reassured that this decision is based on the latest information concerning the first hSEPP.

In an embodiment, if the result of the comparison shows a change, actions are performed by the first network, in particular by the vSEPP during the active n32-f communication, to account for this change.

This provides the advantage that actions can be taken based on the latest information with respect to the first hSEPP even if the n32-f communication is being active.

In an embodiment, the changes comprise that the first hSEPP is no longer part of the second list and/or the first hSEPP has been assigned to a different order within the second list.

Planned software updates and/or hardware replacements by the first network operator concerning the first hSEPP can be made known by removing the first hSEPP from the list. This has the effect that the following n32-f communications are not being established over the first hSEPP. The assignment to a different order can be based on load-balancing criteria. If the first hSEPP is assigned to higher priority, more future n32-f communications can be established over the first hSEPP and vice versa. As already sharply explained above, load-balancing actions can also be used to free resources so that certain QoS values can be guaranteed for specific use cases.

In an embodiment, existing tasks are processed in a controlled manner via the n32-f connection between the vSEPP and the first hSEPP and that a new n32-f connection is established between the vSEPP and a second hSEPP to process new tasks. In particular, the second hSEPP is listed in the second list. New tasks can be new requests by the vNF functions.

This provides the advantage that a hard breakout of tasks running over an active n32-f connection is being avoided if a change with respect to the hSEPP occurs. Of course, the first network operator has to consider when he wants to do the changes with respect to the hSEPP to avoid a hard break out in order that the changes are not happening before the TTL has been expired. It is of further advantage to add a certain security time interval to ensure that all running active tasks have been finished before the changes are being triggered. In another embodiment, the hSEPP can signal to the second network operator that the n32-f connection has been closed and that this signaling is the start signal to introduce the changes.

In an embodiment, the new n32-f connection is first established between the vSEPP and a second hSEPP, and then the existing tasks are processed in a controlled manner over the n32-f connection between the vSEPP and the first hSEPP.

This provides the advantage that the changes are being taken into account as soon as possible and that no new requests being set up over the first hSEPP so that it can work off its remaining tasks efficiently. Furthermore, no break of the communication happens because the second hSEPP provides the communication with respect to new requests.

In an embodiment, the n32-f connection between the vSEPP and the first hSEPP is closed if all existing tasks have been processed.

This provides the advantage that the n32-f connection is closed in a well-defined manner and that this closing can be the starting signal for the second network operator to introduce the changes with respect to the first hSEPP.

In an embodiment, every time the TTL value has expired once more, a corresponding further FQDN message that is a DNS query with FQDN is send followed by the respective comparison and the corresponding actions.

This provides the advantage that the evaluation is performed regularly throughout the whole lifetime of the n32-f connection because changes can also happen after the first expiration of the TTL value.

In an embodiment, the time-to-live is stored and evaluated within the vSEPP.

This provides the advantage of reducing data traffic within the first network as the vSEPP is anyhow concerned with the n32-f connections.

In an embodiment, the method applies to a roaming use case and the first network is a vPMN and the second network is a hPMN.

Hence, the method covers a typical use case in which two different networks communicate with each other, the visited network is the vPMN and the home network is the hPMN. Hence, the service request or the network function request can be sent by a UE whose SIM or eSIM is subscribed to the home network.

In an embodiment, the TTL value is smaller than 1 day, in particular between 7200s and 1800s, very especially 3600 s.

The higher the TTL value is being set, the less signaling traffic is being introduced, however, this signaling traffic is in generally anyhow very low so that it is also possible to set the TTL value to lower values that have the advantage of a finer granularity with respect to taking changes into account.

In an embodiment, the TTL value depends on the time the request is send. For example, the TTL can be set higher in times when no changes or less frequent changes are being expected.

According to a second aspect of the invention, a SEPP to enable efficient n32-f communications between two networks is being disclosed, wherein the SEPP is configured to trigger the sending of a second FQDN message to the hDNS if the n32-f communication between the vSEPP and the first hSEPP is still active and if the TTL value has expired.

The advantages are in principle analog to those described within the context of the invention.

The SEPP this being configured to perform the steps of the method described above that can be implemented on the SEPP.

In particular, the step can be configured to perform the method according to claims 3 to 4, 6 to 12.

According to a third aspect of the invention, a communication system to enable efficient n32-f communication between the two networks is disclosed, wherein the communication system is configured to perform the method described above is being disclosed.

The advantages of the communication system are in principle analog to those described within the context of the invention.

In the following, preferred implementation examples of the present invention are explained with reference to the accompanying figure:

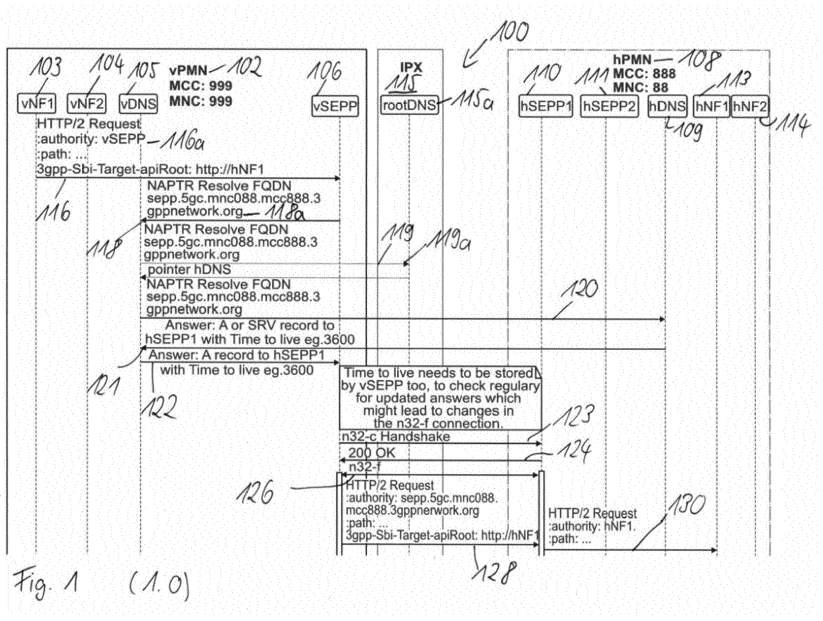

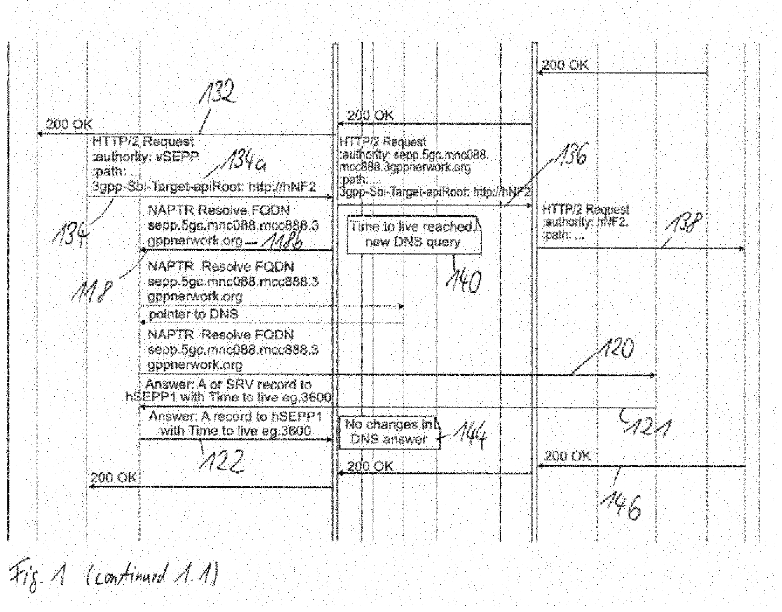

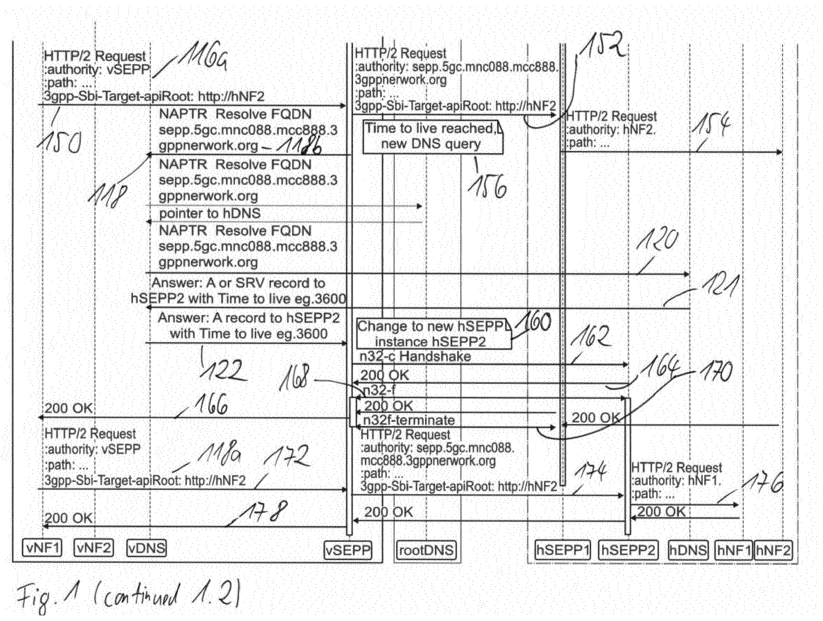

Fig. 1: shows a communication system to enable efficient n32-f communication between the two networks;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

If not technically necessary, the steps of the methods disclosed can be executed in another order. However, in a special embodiment, the steps of the method are being executed in the order described below.

Fig. 1 shows a communication system 100, in particular a 3GPP communication system according to the current standard of the application date of the invention configured to perform the method according to the invention.

The communication system 100 can comprise:
- a first network 102, in particular a visited network 102 vPMN, that can comprise
   ∘ a first network function vNF1 103, a second network function vNF2 104, a domain name server vDNS 105 and a Security Edge Protection Proxy (SEPP) vSEPP 106;
- a second network 108, in particular a home network hPMN 108, that can comprise
   ∘ a domain name server hDNS 109 and a first Security Edge Protection Proxy (SEPP) hSEPP 110, a second hSEPP 111, a first network function hNF1 113, and/or a second network function hNF2 114;
- optionally: an IPX network 115 that comprises a rootDNS 115a;

In step 116: the network function vNF1 103 is started, in particular by a UE or by a SIM by sending a SUCI 116a message to the vSEPP 106, to request a service.

In step 118: the vSEPP 106 sends a first FQDN message 118a to the vDNS 105 in order to obtain the network address of the first hSEPP 110 or of any of the SEPPs of the home network 108 by providing the MNC 088 and MCC 888. The home network 108 can be determined using the MNC and MCC information.

In optional step 119: the vDNS 105 can ask the rootDNS 115a for the network address of the hDNS 109 and receive an appropriate answer 119a.

In step 120: the vDNS 105 sends the first FQDN message 118a the hDNS 109 to obtain the communication address of the first hSEPP 110 or of any of the SEPPs of the second network 108.

In step 121: the hDNS 109 sends as an answer a first list of available SEPPs of the second network 108, wherein the list comprises at least the communication address of the first hSEPP 110 along with a time-to-live (TTL) value, wherein the TTL can be 3600 seconds.

In step 122: the vDNS 105 provides the vSEPP 106 with this first list, wherein the information of the list, in particular the TTL value, is stored within the vSEPP 106.

In step 123: the vSEPP 106 is able, based on the communication address of the first hSEPP 110, to directly establish a n32-handshake communication with the first hSEPP 110. The n32-handshake enables to set up a tunnel between the vSEPP 106 and the first hSEPP 110.

In step 124: the first hSEPP send a "200 ok" message to the vSEPP 106 to acknowledge a successful handshake procedure.

In step 126, the vSEPP 106 sets up a n32-f communication with the first hSEPP 110 to send the SUCI message 116a in step 128 first to the first hSEPP 110, wherein the first hSEPP 110 then routes the message 116a in step 130 to the corresponding first network function hNF1 113 of the second network 108 to provide a service.

After the hNF1 113 has received the message 116a, a "200 ok" message can be sent in step 132 from the hNF1 113 to the first network function vNF1 103 to acknowledge successful communication establishment. In the following, the service related to the network function(s) can be run.

In the case of an active n32-f communication between the vSEPP 106 and the first hSEPP 110, the vSEPP 106 is able to use the active n32-f communication to operate further network functions.

This is illustrated in step 134, in which the second network function vNF2 104 sends a SUCI message 134a to the vSEPP 106.

In step 136, the vSEPP 106 sends the message 134a to the first hSEPP 110.

In step 138, the first hSEPP 110 sends the message 134a to the corresponding second network function hNF2 114.

Right after the n32-f communication has been activated in step 126, the vSEPP 106 start a clock to assess when the TTL value of e.g. 3600 seconds has been expired. This has happened after step 138 and is being indicated by the box 140 that states: TTL is reached. It is now a core idea of the invention to send a new DNS query by sending a second FQDN message even if the n32-f communication is still active.

Hence in the following, the steps 118 to 122 are being repeated, wherein the first a first FQDN message 118a is replaced by the second FQDN message 118b and the first list is being replaced by the second list. An algorithm that can be implemented on the vSEPP 106 compares the first list with a second list and provides the results to the vSEPP 106. Depending on the outcome of the comparison, the behavior of the vSEPP 106 can change.

Box 144 illustrates case a) that deals with the situation that the comparison shows that the second list shows no changes in comparison with the first list. Hence, in case a) the n32-f communication is simply continued. So that the following steps are being executed as if no second FQDN message 118b would have been sent. The clock to measure the expiration of the TTL value set to zero and is started again.

In step 146: After the hNF2 114 has received the message 134a, a "200 ok" message can be sent in step 140 from the hNF2 114 to the second network function vNF2 104 to acknowledge successful communication establishment. In the following the service related to the network function can be operated.

In step 150, the first network function vNF1 103 sends a SUCI message 116a to the vSEPP 106.

In step 152, the vSEPP 106 sends the message 116a to the first hSEPP 110.

In step 154, the first hSEPP 110 sends the message 134a to the corresponding second network function hNF1 114.

Box 156 illustrates that after step 154 the TTL has expired once more so that again a FQDN message shall be sent to evaluate if any changes with respect to the first hSEPP 110 have occurred.

Hence in the following, the steps 118 to 122 are being repeated, wherein the first a first FQDN message 118a is replaced by the second FQDN message 118b and the first list is being replaced by the second list. An algorithm that can be implemented on the vSEPP 106 compares the first list with a second list and provides the results to the vSEPP 106. Depending on the outcome of the comparison, the behavior of the vSEPP 106 can change.

Box 160 illustrates case b) that deals with the situation that the comparison shows that the second list shows a change in comparison to the first list. In particular the first hSEPP 110 is no longer part of the list. This can be done by the second network operator 108 if software updates or hardware replacement with respect to the first hSEPP 110 is planned. However, the second list now shows at least the second hSEPP 111 with its corresponding communication address. A set of rules implemented within the vSEPP 106 commands the vSEPP 106 to set up a new n32-f communication with the second hSEPP 111 first and to send new SUCI message 116a to the second hSEPP 111 and to work off running tasks with respect to the old n32-f communication with the first hSEPP 110 and then to terminate the old n32-f communication with the first hSEPP 110 after the tasks have been finished successfully.

Hence, in step 162: the vSEPP 106 is able, based on the communication address of the second hSEPP 111, to establish a n32-handshake communication with the second hSEPP 111. The n32-handshake enables to set up a tunnel between the vSEPP 106 and the second hSEPP 111.

In step 164: the second hSEPP 111 sends a "200 ok" message to the vSEPP 106 to acknowledge a successful handshake procedure.

In step 166, the vSEPP 106 sets up a n32-f communication with the second hSEPP 110 to send new SUCI message 116a, 134a to the second hSEPP 111.

In the meanwhile, the second network function hNF2 114 send a "200 ok" message over the still active n32-f communication over the first hSEPP 110 to the first network function vNF1 103.

In step 170: after the tasks that were running over the n32-f communication between the first hSEPP 110 and the vSEPP 106 have been worked off, the n32-f communication between the first hSEPP 110 and the vSEPP 106 is terminated.

In step 172, the first network function vNF1 103 sends a SUCI message 116a to the vSEPP 106.

In step 174, the vSEPP 106 sends the message 116a to the second hSEPP 111.

In step 176, the second hSEPP 111 sends the message 116a to the first network function hNF1 113.

In step 178, the first network function hNF1 113 send a "200 ok" message to the first network function vNF1 103 and the service starts.

The invention therefore shows an elegant way to avoid a hard disconnection of n32-f connections, in that the vSEPP also adheres to the time to live and starts a new DNS resolution after expiry, despite an existing n32-f connection.

If the hPMN wants to move the traffic from an hSEPP1 to an hSEPP2, for example, in order to be able to carry out a software update, this is possible simply by returning the IP of the hSEPP2 in the DNS response.

The maximum delay for implementing such a change therefore only depends on the time to live, which must be waited for. If the vSEPP receives a different response, it must implement this accordingly. Parallel to the existing n32-f connection to hSEPP1, a second n32-f connection to hSEPP2 can be established. As soon as all transactions that have been completed via the existing connection to hSEPP1 have been completed, this can be terminated.

In general, this does not rule out parallel connections to several hSEPPs, for example for load balancing. For example, if three hSEPPs are to be used simultaneously in load balancing. In this case, the order of the hSEPPs in the round robin procedure in the DNS response could change from query to query, but the destinations are always the same. An action is therefore not necessarily required. However, if a new hSEPP is added, it should of course be added to the load-balancing group first. The same applies to removing a hSEPP from the load-balancing group.

## Claims

1. A method for efficient operating of n32-f communications between two networks (102, 108) comprising the following steps:
• sending (116a) a communication request of a first network function (103) within a first network (102) to communicate with a first network function (113) within a second network (108);
• resolving (120) the communication request by sending a first FQDN (118a) message from a vDNS (105) of the first network (102) to a hDNS (109) of the second network (108), wherein the hDNS (109) sends a first list of at least one first hSEPP (110) of the second network (108), along with its communication address and a time-to-live, TTL, value;
• providing (122) the list to a vSEPP (106) of the first network to establish a n32-f communication (126) between the vSEPP (106) and the hSEPP (110);
**characterized in that**
if the n32-f communication (126) between the vSEPP (106) and the hSEPP (110) is still active and if the TTL value has expired, the vSEPP (106) requests the vDNS (105) to send a second FQDN message (118b) to the hDNS (109), wherein the hDNS (109) sends a second list to the vDNS (105), wherein an algorithm within the first network (102) compares the first list with the second list and provides the result of the comparison to the vSEPP (106).

2. The method of claim 1, wherein the first list and/or the second list comprises a plurality of hSEPPs (110, 111) with a corresponding communication addresses.

3. The method of claim any of the claims, **characterized in that** if the result of the comparison shows no changes the n32-f communication between the vSEPP (106) and the first hSEPP (110) is continued.

4. The method of claims 1 to 2, **characterized in that** if the result of the comparison shows a change, actions are performed by the first network (102), in particular by the vSEPP during the active n32-f communication, to account for this change.

5. The method of any of the claims 3 to 4, wherein the changes comprise that the first hSEPP (110) is no longer part of the second list and/or the first hSEPP (110) has been assigned to a different order within the second list.

6. The method of claim 5, wherein existing tasks are processed in a controlled manner via the n32-f connection between the vSEPP (106) and the first hSEPP (110) and that a new n32-f connection (168) is established between the vSEPP (106) and a second hSEPP (111) to process new tasks.

7. The method of claim 6, wherein the new n32-f connection is first established between the vSEPP (106) and the second hSEPP (111), and then the existing tasks are processed in a controlled manner over the n32-f connection between the vSEPP (106) and the first hSEPP (110).

8. The method of any of the claims 6 to 7, wherein the n32-f connection between the vSEPP (106) and the first hSEPP (110) is closed if all existing tasks have been processed.

9. The method of any of the claims, wherein every time the TTL value has expired again a corresponding further FQDN message is send followed by the respective comparison and the corresponding actions.

10. The method of any of the claims, wherein the time-to-live is stored and evaluated within the vSEPP

11. The method of any of the claims, wherein the method applies to a roaming use case and the first network is a vPMN (102) and the second network is a hPMN (108).

12. The method of any of the claims, wherein the TTL value is smaller than 1 day, in particular between 7200s and 1800s, very especially 3600 s.

13. The method of any of the claims, wherein the TTL value depends on the time the request is send.

14. A SEPP (106) to enable efficient n32-f communication between two networks, wherein the SEPP is configured to trigger the sending of a second FQDN message to the hDNS if the n32-f communication between the vSEPP and the first hSEPP is still active and if the TTL value has expired.

15. A communication system (100) to enable efficient n32-f communication between the networks configured to perform the method according to any of the claims 1-13.

## Amended claims

### Amended claims in accordance with Rule 137(2) EPC.

1. A method for efficient operating of n32-f communications between two networks (102, 108) comprising the following steps:
• sending (116a) a communication request of a first network function (103) within a first network (102) to communicate with a first network function (113) within a second network (108);
• resolving (120) the communication request by sending a first FQDN (118a) message from a vDNS (105) of the first network (102) to a hDNS (109) of the second network (108), wherein the hDNS (109) sends a first list of at least one first hSEPP (110) of the second network (108), along with its communication address and a time-to-live, TTL, value;
• providing (122) the list to a vSEPP (106) of the first network to establish a n32-f communication (126) between the vSEPP (106) and the hSEPP (110);
**characterized in that**
if the n32-f communication (126) between the vSEPP (106) and the hSEPP (110) is still active and if the TTL value has expired, the vSEPP (106) requests the vDNS (105) to send a second FQDN message (118b) to the hDNS (109), wherein the hDNS (109) sends a second list to the vDNS (105), wherein an algorithm within the first network (102) compares the first list with the second list and provides the result of the comparison to the vSEPP (106),
wherein if the result of the comparison shows a change, actions are performed by the first network (102), in particular by the vSEPP during the active n32-f communication, to account for this change,
wherein the changes comprise that the first hSEPP (110) is no longer part of the second list and/or the first hSEPP (110) has been assigned to a different order within the second list,
existing tasks are processed in a controlled manner via the n32-f connection between the vSEPP (106) and the first hSEPP (110) and that a new n32-f connection (168) is established between the vSEPP (106) and a second hSEPP (111) to process new tasks.

2. The method of claim 1, wherein the first list and/or the second list comprises a plurality of hSEPPs (110, 111) with a corresponding communication addresses.

3. The method of claim any of the claims, **characterized in that** if the result of the comparison shows no changes the n32-f communication between the vSEPP (106) and the first hSEPP (110) is continued.

4. The method of claim 1, wherein the new n32-f connection is first established between the vSEPP (106) and the second hSEPP (111), and then the existing tasks are processed in a controlled manner over the n32-f connection between the vSEPP (106) and the first hSEPP (110).

5. The method of any of the claims 1 or 6, wherein the n32-f connection between the vSEPP (106) and the first hSEPP (110) is closed if all existing tasks have been processed.

6. The method of any of the claims, wherein every time the TTL value has expired again a corresponding further FQDN message is send followed by the respective comparison and the corresponding actions.

7. The method of any of the claims, wherein the time-to-live is stored and evaluated within the vSEPP

8. The method of any of the claims, wherein the method applies to a roaming use case and the first network is a vPMN (102) and the second network is a hPMN (108).

9. The method of any of the claims, wherein the TTL value is smaller than 1 day, in particular between 7200s and 1800s, very especially 3600 s.

10. The method of any of the claims, wherein the TTL value depends on the time the request is send.

11. A SEPP (106) to enable efficient n32-f communication between two networks, wherein the SEPP is configured to trigger the sending of a FQDN message to the hDNS to obtain a list of at least one hSEPP (110) of the second network (108), along with its communication address and a time-to-live, TTL, value if the n32-f communication between the vSEPP and the first hSEPP is still active and if the TTL value has expired.

12. A communication system (100) to enable efficient n32-f communication between the networks, wherein the communication system is configured to perform the method according to any of the claims 1-10.
